# EUROPÄISCHE PATENTANMELDUNG

(11) **EP 1 616 488 A1**
(43) Veröffentlichungstag der Anmeldung: **18.01.2006**
(21) Anmeldenummer: 05014147.2
(22) Anmeldetag: 30.06.2005
(51) Int. Cl.: A23G 3/22

(54) **Vorrichtung zum Überziehen von essbaren Produktstücken mit einer Kakaobutter oder ein sonstiges Fett enthaltenden Masse**

(30) Priorität: 13.07.2004 DE 102004033713
(71) Anmelder: CHOCOTECH GmbH, 38855 Wernigerode (DE)
(72) Erfinder: Häring, Horst, 38895 Derenburg (DE); Hochapfel, Birk, 38855 Wernigerode (DE)
(74) Vertreter: Rehberg Hüppe + Partner

(57) **Zusammenfassung**

Eine Vorrichtung (1) zum Überziehen von essbaren Produktstücken mit einer Kakaobutter oder ein sonstiges Fett enthaltenden Masse, ist mit einem zumindest etwa vertikale Säulen (4) aufweisenden Rahmen (3), einem im Rahmen (3) ortsfest angeordneten angetriebenen Gitterband (15) zur Aufnahme der Produktstücke, einem Schleierbildner (10), einem Kreislauf für die Masse mit Pumpe (8) und Steigrohr (9) sowie einer Wanne (7) zum Auffangen der Überschussmasse versehen. Die Wanne (7) weist in Arbeitsrichtung (2) eine solche Länge auf, dass sämtliche Überschussmasse, die von dem Gitterband (15) und von dem Gitterband zugeordneten Teilen der Vorrichtung (1) abtropft, von der Wanne (7) aufgefangen wird. Der Rahmen (3) mit seinen Säulen (4) ist die Vorrichtung außen mit Abstand umhüllend angeordnet. Der Rahmen (3) weist so zwischen seinen Säulen (4) in Arbeitsrichtung (2) einen größeren Abstand und Freiraum (12) auf, als es der Länge und Höhe der Wanne (7) entspricht. Die Wanne (7) ist als unter dem Gitterband (15) zwischen den Säulen (4) seitlich herausfahrbare und freikommende Wanneneinheit (6) ausgebildet.

## Beschreibung

Die Erfindung betrifft eine Vorrichtung zum Überziehen von essbaren Produktstücken mit einer Kakaobutter oder ein sonstiges Fett enthaltenden Masse mit den im Oberbegriff des Anspruchs 1 angegebenen Merkmalen. Eine solche Vorrichtung bzw. Überziehmaschine dient dem Aufbringen eines Überzugs auf Produktstücke bzw. Artikel der Nahrungs- und Süßwarenindustrie, insbesondere auf Riegel, Gebäckstücke und sonstige Artikel. Bei der aufzubringenden Masse handelt es sich in der Regel um Schokolademasse. Aber auch andere fetthaltige Massen, Überzugsmassen, Karamellmassen oder dergleichen können mit einer solchen Überziehmaschine verarbeitet werden. Die zum Überziehen eingesetzte Masse wird aus einer Wanne entnommen, durch eine Pumpe in ein Steigrohr gedrückt, welches in einem Schleierbildner, etwa in Form eines Schleierkastens oder einer Rohrverteilungseinrichtung, endet. Die Masse fällt dann im freien Fall in Form eines Vorhangs von dem Schleierbildner infolge Schwerkrafteinwirkung nach unten, wobei horizontal und quer zum Vorhang die Produktstücke auf einem Gitterband gefördert werden. Dabei findet das Überziehen statt. Die überschüssige Masse gelangt durch das Gitterband hindurch nach unten und wird von der unter dem Gitterband vorgesehenen Wanne aufgefangen.

### STAND DER TECHNIK

Eine Vorrichtung der eingangs beschriebenen Art ist aus der DE 42 43 814 C1 bekannt. Die Vorrichtung besitzt einen gitterartig ausgesteiften Rahmen mit sich im Wesentlichen vertikal erstreckenden Säulen. In der Regel ist dieser Rahmen zumindest im unteren Bereich verkleidet, so dass die Säulen im Innern angeordnet sind. In diesem die Säulen aufweisenden Rahmen ist eine Wanne ortsfest gelagert. Die Wanne weist schräg gestaltete Ablaufflächen auf. Am tiefsten Punkt der Wanne ist eine Pumpe angeordnet, die die Masse ansaugt und in ein Steigrohr überführt. Das Steigrohr endet in einem Schleierbildner. Zwischen Schleierbildner und Wanne ist ein Gitterband vorgesehen, welches sich mit seinem oberen Trum horizontal erstreckt und auf dem die zu überführenden Produktstücke durch die Vorrichtung hindurchgefördert werden. Das Gitterband ist insbesondere in seinem unteren Trum über eine Anzahl von Spann- und Umlenkwalzen geführt. Am Eingang des Gitterbandes und am Ausgang desselben sind ebenfalls Umlenkwalzen vorgesehen, die vorzugsweise einen relativ kleinen Durchmesser aufweisen, um die Abnahme und die Abgabe der Produktstücke an Anschlussbändern sicherzustellen. Im Bereich des Gitterbandes kann auch eine Bodenwallstation vorgesehen sein. Oft ist dem Gitterband auch eine Rüttelvorrichtung zugeordnet. Auch können der ausgangsseitigen Umlenkwalze des Gitterbandes Entschwänzer- und/oder Leckwellen zugeordnet sein. Die einzelnen Elemente des Gitterbandes, also das durchbrochene Gitterband selbst, die Umlenkwellen sowie sonstige dem Gitterband zugeordnete Elemente kommen mit der Überzugsmasse in Kontakt, so dass sich die Masse an diesen Elementen mehr oder weniger stark aufbaut. Während des normalen Betriebes und infolge der an diesen Elementen herrschenden Temperaturen tropft überschüssige Masse von diesen Elementen ab und wird in der Wanne aufgefangen.

Im oberen Bereich der Vorrichtung sind die Versorgungs- und Steuerelemente für elektrische Energie vorgesehen. Auch die jeweiligen Antriebe werden von hier gesteuert. Oft ist in dieser Einheit auch ein oder mehrere Gebläse untergebracht. Es sind der Oberfläche des Gitterbandes zugekehrte Düsen vorgesehen, durch die Luft auf die frisch überzogenen Produktstücke geblasen wird, um den Überzug zu vergleichmäßigen und in seiner Dicke zu reduzieren.

Aus Hygienegründen ist es erforderlich, eine solche Vorrichtung zu reinigen und dabei die aufgebauten und abgesetzten Massen aus der Vorrichtung möglichst vollständig zu entfernen. Auch bei einem Massewechsel, beispielsweise von dunkler Schokolade auf weiße Schokolademasse, ist es erforderlich, die Vorrichtung zu entleeren und deren Teile zu reinigen. Weiterhin unterliegt das eingesetzte Gitterband einem entsprechenden Verschleiß. Demzufolge sind Reparaturen am Gitterband bis hin zu einem Austausch des Gitterbandes in entsprechenden zeitlichen Abständen erforderlich. All diese angesprochenen Arbeiten können bei der bekannten Vorrichtung zwar durchgeführt werden. Die Arbeiten sind jedoch insofern erschwert, als durch den Zusammenbau der einzelnen Elemente der Vorrichtung eine einzige feste Einheit geschaffen ist. Zwischen den einzelnen Elementen ergeben sich nur gering ausgebildete Abstandsräume, so dass die Zugänglichkeit erschwert ist. Dies gilt für Reparatur- und Wartungsarbeiten, wie auch für Arbeiten, die bei einem Massewechsel oder dergleichen erforderlich werden.

Aus der DE 87 04 693 U1 ist eine Vorrichtung zum Überziehen von essbaren Produktstücken mit einer Kakaobutter oder ein sonstiges Fett enthaltenden Masse bekannt. Die Vorrichtung besitzt ein Gehäuse, in welchem die wesentlichen Elemente einer Überziehmaschine untergebracht sind. Das Gehäuse weist eine Einlassöffnung und eine Auslassöffnung auf, die von einem angetriebenen Gitterband überbrückt werden. Das Gehäuse kann von einem dreidimensional aufgebauten Rahmen mit vertikalen Säulen getragen sein, die dem Inneren der Vorrichtung zugekehrt vorgesehen sind. Die Vorrichtung weist auch eine Bodenwallstation auf, unter der eine Vorrats- und Speisevorrichtung seitlich herausfahrbar angeordnet ist. Hierzu müssen verschiedene Leitungen mit Schnellverschlusskupplungen gelöst werden. Die Länge der Vorrats- und Speisevorrichtung in Arbeitsrichtung ist wesentlich geringer als die Länge des Gitterbands. Damit ist die Vorrats- und Speisevorrichtung, die schräggestellte Ablaufbleche aufweist, nicht in der Lage, sämtliche von dem Gitterband abtropfende Überschussmasse aufzufangen.

Es ist eine Überziehmaschine bekannt, die für die Verarbeitung relativ kleiner Massemengen ausgebildet ist. Die Vorrichtung weist einen verstrebten Rahmen auf, der kubusartig ausgebildet ist und an den hier interessierenden Stellen so verkleidet ist, dass die vertikalen Säulen des Rahmens sich im Innern befinden. Die Vorrichtung weist eine auf Schienen seitlich herausfahrbare Wanne auf. Die Wanne ist gegen Anschläge begrenzt aus der Maschine herausfahrbar. Sie kommt nicht von der Maschine frei, so dass sie selbst in der herausgefahrenen Stellung die Zugänglichkeit des Gitterbandes in der Maschine auf der Bedienseite beeinträchtigt. Das Gitterband ist nur von der anderen Seite der Maschine her zugänglich. Das Steigrohr weist mehrere Abschnitte auf. Ein Abschnitt ist ortsfest an Wangen des Gitterbandes gelagert und besitzt zwei Schnellverschlüsse, von denen der untere gelöst werden muss, wenn die Wanne gegen Anschlag seitlich herausgefahren werden soll. Im Steigrohr vorhandene Restmasse kann dann auch noch in die Wanne abtropfen, wenn sich die Wanne in der begrenzt herausgefahrenen Stellung befindet. Die sich in Arbeitsrichtung erstreckende Länge der Wanne ist erheblich kleiner ausgebildet als die Gitterbandlänge. Demzufolge sind an der Vorrichtung ortsfeste schräggestellte Ablauf bleche vorgesehen, die nicht mit herausgefahren werden, gleichwohl bei einer Reinigung mit erfasst werden müssen. Auch die gegen Anschlag herausfahrbare Wanne muss letztlich an Ort und Stelle gereinigt werden. Es ist nicht möglich, die Wanne vollständig und damit frei von der Vorrichtung zu lösen und an einen Ort zu verbringen, so dass sie dort leichter und besser gereinigt werden könnte. Auch der Austausch mehrerer Wannen, beispielsweise für mehrere Massen, ist nicht möglich. Vom Schleierbildner herabtropfende Masse gelangt bei herausgefahrener Masse auf den Boden, so dass eine entsprechende Reinigung erforderlich wird. All diese Besonderheiten führen letztlich dazu, dass die Reinigung dieser bekannten Maschine umständlich, zeitraubend und teuer ist. Entsprechend hohe Hygienevorschriften können nicht erfüllt werden.

Die eingangs beschriebene gattungsgemäße Vorrichtung sowie weitere Vorrichtungen mit fest eingebauter Wanne lassen sich nur an Ort und Stelle reinigen. Hierzu ist es bekannt, die gesamte Vorrichtung zu fluten. Damit wird ein anderer Weg beschritten, die Hygienevorschriften zu erfüllen.

### AUFGABE DER ERFINDUNG

Der Erfindung liegt die Aufgabe zugrunde, eine Vorrichtung der eingangs beschriebenen Art bereitzustellen, deren einzelne Elemente zu Zwecken der Wartung und Reinigung sowie bei einem Massewechsel leichter zugänglich sind. Reinigungs- und Umrüstzeiten sollen verkürzt werden.

### LÖSUNG

Die Aufgabe der Erfindung wird erfindungsgemäß mit den Merkmalen des unabhängigen Patentanspruchs 1 gelöst.

### BESCHREIBUNG DER ERFINDUNG

Die Erfindung geht von dem Gedanken aus, die Wanne vergleichsweise länger auszubilden als das Gitterband, und zwar in Arbeitsrichtung. Auch dem Gitterband zugeordnete Teile, insbesondere die beiden Umlenkwellen oder Messerkanten, sollen innerhalb der Länge der Wanne angeordnet sein. Dies gilt auch für am Auslauf des Gitterbandes zusätzlich angeordnete Entschwänzer- und/oder Leckwellen. Die Wanne ist jedenfalls länger als all diese Elemente, so dass von dem Gitterband oder von diesen Teilen abtropfende Masse unmittelbar von der Wanne aufgenommen wird. Die Vorrichtung weist insoweit keine ortsfesten Elemente wie etwa schräge Ablaufbleche auf, die die Wanne ergänzen würden. Der Rahmen der Vorrichtung befindet sich nicht mehr im Innern, sondern wird gleichsam außen mit Abstand die Vorrichtung umhüllend angeordnet. Der Rahmen weist zwischen seinen Säulen in Arbeitsrichtung einen größeren Abstand und Freiraum auf, als es der Höhe und Länge der Wanne entspricht. Damit ergibt sich die Möglichkeit, die Wanne seitlich aus der Vorrichtung herauszufahren. Die Ausfahrbarkeit begrenzende Anschläge werden vermieden, so dass die Wanne nicht nur eine begrenzte Strecke seitlich herausfahrbar ist, sondern vollkommen von der Vorrichtung freikommt. Dabei ist es insbesondere möglich, die Wanne an einen anderen Ort zu verbringen, beispielsweise in einen Waschraum, in welchem die Wanne und die mit ihr verbundenen Elemente leichter und zuverlässiger gereinigt werden können als am Produktionsstandort. Gleichzeitig ergibt sich damit aber auch die Möglichkeit, mehrere Wannen einzusetzen und diese beispielsweise bei einem Massewechsel sinnvoll und zeitsparend zu nutzen. Das Gitterband verbleibt bei dieser Vorrichtung ortsfest an Ort und Stelle, also in der Vorrichtung bzw. am Rahmen. Durch die völlige Wegnahmemöglichkeit der Wanne wird das Gitterband jedoch sehr gut zugänglich. Dies trifft insbesondere auch auf das untere Trum des Gitterbandes zu, in dessen Bereich mehrere Umlenk- und Spannrollen vorgesehen sind, auf die während des Betriebes Masse abtropft, die sich dort aufbaut. Damit verkürzt sich die Reinigungs- und Wartungszeit der angesprochenen Elemente der Vorrichtung. Hygienevorschriften können besser eingehalten werden, weil die Zugänglichkeit der Elemente und damit die Reinigungsmöglichkeiten verbessert sind. Durch die Zusammenfassung der Wanne mit den ihr zugeordneten Elementen zu einer Wanneneinheit ergibt sich die Möglichkeit, bei der Herstellung einer solchen Vorrichtung die Wanneneinheit komplett zu montieren und dann als Einheit insgesamt zu handhaben, also insbesondere in den Rahmen einzuhängen oder auch nur frei seitlich in den Rahmen einzufahren. Es genügt, wenn die Wanneneinheit auf Rädern frei verfahrbar ist. Eine Fixierung der Wanneneinheit innerhalb der Vorrichtung ist sinnvoll, vielfach aber nicht einmal erforderlich.

Besonders vorteilhaft ist es, wenn die herausfahrbare und freikommende Wanneneinheit zumindest die Pumpe für den Umlauf der Masse, das Steigrohr und den Schleierbildner oder zumindest einen Teil des Schleierbildners umfasst. Einer so definierten Wanneneinheit kommt auch selbständige erfinderische Bedeutung zu. Bei den angesprochenen Reparatur- und Servicearbeiten oder auch bei einem Massewechsel ist es nicht mehr erforderlich, Schnellverschlüsse am Steigrohr zu bedienen und die erforderlichen Maßnahmen gegen das Nachtropfen von Restmasse zu ergreifen. Das Steigrohr wird nicht mehr geöffnet. Von dem Schleierbildner abtropfende Restmasse gelangt ohne weiteres und sicher in die Wanne, auch wenn diese herausgefahren und freigekommen ist. Eine Verschmutzung des Bodens, auf dem die Vorrichtung aufgestellt ist, entfällt. Es genügt oft auch bereits, wenn nur ein Teil des Schleierbildners an der Wanneneinheit angeordnet wird. Dies bezieht sich insbesondere auf einen Schleierkasten oder ein Verteilerrohr, während beispielsweise ein dem Verteilerrohr nachgeschaltetes Verteilerblech ortsfest in der Vorrichtung verbleiben kann, während die Wanne seitlich herausgefahren wird und freikommt.

Die Wanneneinheit, das Gitterband mit seiner Lagerung und seinem Antrieb sowie elektrische Versorgungs- und Steuerelemente können als je eine separat montierbare Einheit ausgebildet sein, die einzeln in den Rahmen einfügbar sind. Diese Ausgestaltung verkürzt die Montagezeiten einer solchen Vorrichtung erheblich. Sämtliche Einheiten können örtlich getrennt voneinander insbesondere parallel fertiggestellt werden. Diese Einheiten werden dann nacheinander in den Rahmen eingefügt und dort befestigt bzw. in Relation gebracht. Bei der Fertigstellung der einzelnen Elemente stören sich die tätigen Personen nicht gegenseitig, so dass die Herstellungs- und die Montagezeit entsprechend verkürzt wird.

Die Ausbildung des Rahmens der Vorrichtung unterscheidet sich von den bisher bekannten Rahmenkonstruktionen grundlegend. Der Rahmen ist nicht mehr im Innern der Vorrichtung teilweise von Verkleidungsblechen verdeckt, angeordnet, sondern er umgibt die einzelnen Einheiten außen in entsprechendem Abstand. Im Horizontalschnitt sind die Querschnitte der Säulen außerhalb des Feldes bzw. der Fläche angeordnet, die sich aus der Länge und der Breite der Gitterbandeinheit und der darunter angeordneten Wanneneinheit ergeben. Der Rahmen wird damit zu einem auffälligen gestalterischen Element, so dass die Vorrichtung damit auch in ästhetischer Hinsicht Eigentümlichkeiten erhält.

Die Gitterbandeinheit bildet eine ebenfalls handhabbare Einheit, die mindestens das Gitterband, die Umlenkwellen, die Seitenwangen und die Lagerung der Wellen und der Antriebselemente umfasst. Wenn das Gitterband noch weitere Elemente aufweist, beispielsweise Entschwänzer- und Leckwellen, dann gehören auch diese mit zur Gitterbandeinheit.

Auch diese Wellen werden in den Seitenwangen gelagert. Da die Wanne mit ihrer Horizontalfläche eine größere Fläche aufweist, als es der Gitterbandeinheit entspricht, wird nicht nur der Vorteil erreicht, dass bei der normalen Produktion sämtliche vom Gitterband und deren Elementen abtropfende Masse von der Wanne aufgefangen wird. Die Wanne besitzt in aller Regel auch eine Heizeinrichtung, deren aufgebrachte Wärme, insbesondere nach oben, abstrahlt und damit Elemente der Gitterbandeinheit erreicht. Durch diese Wärme wird das Abtropfen von Masse von den Elementen des Gitterbandes begünstigt bzw. der Aufbau von Masse vermindert und begrenzt.

In einer der Seiten der Gitterbandeinheit ist eine nach außen randoffene Ausnehmung für den Durchtritt des Steigrohres vorgesehen. Die randoffene Ausnehmung erstreckt sich in Ausfahrrichtung der Wanne, so dass die Wanneneinheit mit dem Steigrohr ohne Lösen irgendwelcher Schnellverschlüsse oder dergleichen herausfahrbar ist. Zugleich wird das Abtropfen einer geöffneten Steigrohrleitung und/oder das Abtropfen aus dem Schleierbildner auf den Boden verhindert. Abtropfende Restmasse gelangt auf jeden Fall in die Wanne.

Die Wanneneinheit kann auch eine Reihe weiterer Elemente bzw. Merkmale aufweisen. Die gesamte Wanne kann doppelwandig ausgebildet sein. Eine Heizeinrichtung, in der Regel für Warmwasser, ist ebenfalls an der Wanneneinheit vorgesehen und an die doppelwandige Wanne angeschlossen. Die Pumpe für den Umlauf der Masse sowie die Rückförderpumpe für die Überschussmasse in einen Massebehälter, insbesondere mit Dekristallisator, sind ebenfalls Bestandteil der Wanneneinheit. Auch der Schleierbildner, und zwar einschließlich eines Verteilerbleches, kann Bestandteil der herausfahrbaren und freikommenden Wanneneinheit sein. Es genügt, diese Wanneneinheit auf Rädern frei verfahrbar zu gestalten, was natürlich nicht ausschließt, dass auch eine Verfahrbarkeit auf Schienen möglich ist. Die Verfahrbarkeit wird aber in allen Fällen so gestaltet, dass die Wanneneinheit von dem Rahmen völlig frei kommt, damit insbesondere die ortsfeste Gitterbandeinheit von dieser freigekommenen Seite her zugänglich wird.

Für die Ausbildung des außen angeordneten Rahmens gibt es verschiedene Möglichkeiten. So können je zwei Säulen des Rahmens im oberen Bereich durch einen sich quer zur Arbeitsrichtung erstreckenden Querträger miteinander verbunden sein. Damit ergibt sich gleichsam ein Rahmen am Eingang der Vorrichtung und ein weiterer Rahmen am Ausgang der Vorrichtung, die beide die Gestalt eines umgekehrten U aufweisen. Diese beiden U-förmigen Rahmen werden durch die Gitterbandeinheit und die Versorgungs- und Steuerungseinheit ausgesteift, die an den beiden U-förmigen Rahmen eingefügt und dort gelagert werden. Die Lagerung geschieht insbesondere unter Verwendung von Konsolen. Bei einer solchen Ausbildung des Rahmens ist es möglich, die Wanne so zu konstruieren, dass sie eine größere Horizontalfläche einnimmt als die Gitterbandeinheit und trotzdem seitlich aus der Vorrichtung nicht nur herausfahrbar ist, sondern freikommend gestaltet werden kann. Durch die Verwendung von Konsolen wird ein Abstand der vertikalen Säulen in zwei Richtungen erzielt. Die eine Richtung dient der Herausfahrbarkeit der Wanneneinheit. Die andere Richtung dient dem leichten Anschluss von Transportbändern am Eingang und am Ausgang des Gitterbandes der Vorrichtung.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine perspektivische Darstellung der Vorrichtung mit ihren wesentlichen Elementen.
- **Fig. 2**: zeigt eine Seitenansicht mit einigen Elementen der Vorrichtung.

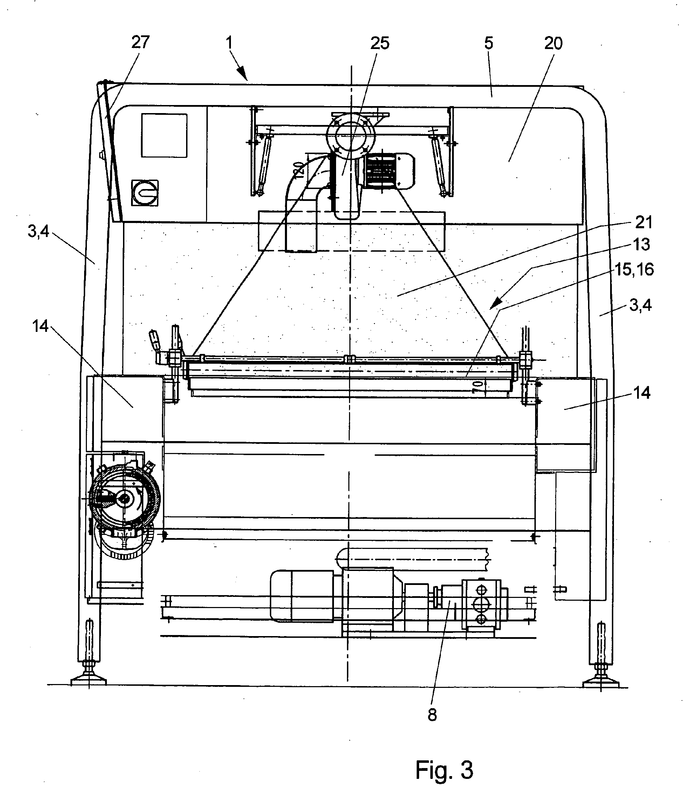

- **Fig. 3**: zeigt eine Stirnansicht der Vorrichtung.
- **Fig. 4**: zeigt einen Detailausschnitt der Wanneneinheit und der Gitterbandeinheit der Vorrichtung.
- **Fig. 5**: zeigt eine schematisierte Ansicht ähnlich der Darstellung der Fig. 3.
- **Fig. 6**: zeigt einen schematisierten Horizontalschnitt gemäß der Linie VI-VI in Fig. 5.

### FIGURENBESCHREIBUNG

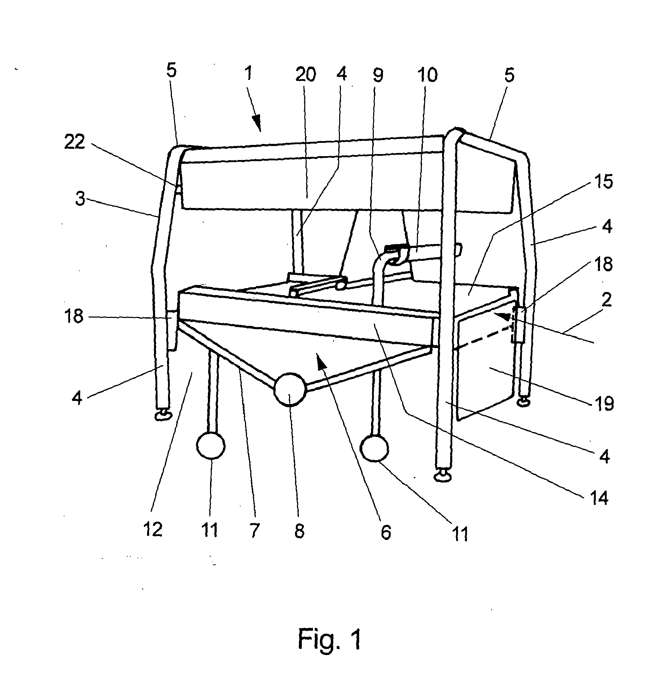

In **Fig. 1** ist eine bevorzugte Ausführungsform der Vorrichtung 1 dargestellt. Die Vorrichtung ist in der Regel länger als breit ausgebildet. Sie erstreckt sich mit ihrer längeren Seite in Arbeitsrichtung 2 gemäß Pfeilangabe. Die Vorrichtung 1 mit ihren Elementen, die später erläutert werden, wird von einem Rahmen 3 getragen. Der Rahmen 3 zerfällt in zwei spiegelsymmetrisch identisch ausgebildete Teile, von denen der eine Teil eingangsseitig und der andere Teil ausgangsseitig vorgesehen ist. Jeder dieser Teilrahmen besitzt zwei im Wesentlichen vertikale Säulen 4, die vertikal durchgehend oder auch geringfügig abgewinkelt vorgesehen sein können. Im vorliegenden Fall sind die oberen Bereiche der vertikalen Säulen 4 in zwei Richtungen geringfügig abgewinkelt ausgebildet. Auf der Eingangsseite der Vorrichtung sind zwei solche Säulen 4 an ihren oberen Enden über einen Querträger 5 so verbunden, dass eine umgekehrt U-förmige Gestalt entsteht. Entsprechendes gilt für die Ausgangsseite der Vorrichtung. Der Rahmen 3 mit seinen Elementen ist so ausgebildet, dimensioniert und angeordnet, dass er sich gleichsam außerhalb der Elemente der Vorrichtung 1 befindet bzw. diese Elemente zwischen sich aufnimmt.

Die Vorrichtung 1 weist in dem von dem Rahmen 3 umgebenen Innenraum von unten nach oben folgende Elemente auf. Es ist eine Wanneneinheit 6 mit einer Wanne 7 und einer Pumpe 8 vorgesehen, die sich in der Wanne 7 ansammelnde Überzugsmasse ansaugt und in ein Steigrohr 9 überführt, welches in einem Schleierbildner 10 endet, aus dem ein Vorhang Überzugsmasse durch Schwerkrafteinwirkung senkrecht herabfällt (nicht dargestellt). Zu der Wanneneinheit 6 können noch weitere Elemente gehören, wie beispielsweise eine Rückförderpumpe für überschüssige Schokolademasse oder eine Heizeinrichtung, mit deren Hilfe die doppelwandig ausgebildete Wanne 7 erwärmt bzw. warmgehalten wird. Dies kann durch einen Warmwasserkreislauf geschehen. Die Wanne 7 bzw. die Wanneneinheit 6 ist mit Hilfe von Rädern 11 verfahrbar. Die Verfahrrichtung erfolgt senkrecht zu der Arbeitsrichtung 2 und damit seitlich aus der Vorrichtung heraus. Statt auf dem Boden, auf dem die Vorrichtung 1 aufgestellt ist, können die Räder 11 aber auch in Schienen geführt sein. Die Verfahrbarkeit ist so gestaltet, dass die in Arbeitsrichtung 2 gemessene Länge der Wanneneinheit 6 kleiner ist als es dem Abstand der beiden auf der Seite vorn und hinten vorgesehenen vertikalen Säulen 4 entspricht. Die Wanneneinheit 6 kann aus der Vorrichtung seitlich herausgefahren werden, wobei sie vollkommen freikommt. Zum Herausfahren der Wanneneinheit 6 weist die Vorrichtung einen entsprechenden Freiraum 12 auf, der der Länge und Höhe nach festgelegt ist.

Oberhalb der Wanneneinheit befindet sich eine Gitterbandeinheit 13. Die Gitterbandeinheit 13 weist zwei sich in Längsrichtung, also in Arbeitsrichtung 2 erstreckende Seitenwangen 14 auf. Zwischen den Seitenwangen 14 bewegt sich das Gitterband 15 in Arbeitsrichtung 2. Auf dem Gitterband 15 sind die zu überziehenden Produktteile bzw. Artikel aufgelegt. Die Produktteile werden so mit Hilfe des angetriebenen Gitterbandes 15 durch die Vorrichtung hindurchgeführt, wobei sie den Vorhang aus Überzugsmasse durchstoßen und dabei überzogen werden. Das Gitterband 15 weist ein oberes Trum 16 und ein unteres Trum 17 auf. Es versteht sich, dass das Gitterband 15 mit seinem oberen Trum 16 und dem unteren Trum 17 über eine Mehrzahl von Umlenk- und Tragwalzen geführt ist, die in den Seitenwangen 14 der Gitterbandeinheit 13 gelagert sind. Auch der Antrieb für das Gitterband 15 ist in diesem Bereich vorgesehen. Die Umlenk- und Antriebswalzen für das Gitterband 15 sind nur schematisch angedeutet. Zur Aufnahme der Gitterbandeinheit 13 sind an den vertikalen Säulen 4 Konsolen 18 angeordnet, die schrägstehend positioniert sind. Die Gitterbandeinheit 13 kann als Einheit fertig montiert in den Rahmen 1 eingehängt und mit Hilfe der Konsolen 18 fixiert werden.

Im unteren Bereich, also unterhalb der Gitterbandeinheit 13 in dem Bereich, in dem die Wanneneinheit 6 vorgesehen ist, kann die Vorrichtung 1 Verkleidungselemente 19 aufweisen. Ein solches Verkleidungselement 19 ist an der Einlaufseite der Vorrichtung beispielhaft dargestellt. Es versteht sich jedoch das die Verkleidungselemente 19 im unteren Bereich auf allen vier Seiten der Vorrichtung 1 vorgesehen sind. Die Verkleidungselemente 19 an den beiden Längsseiten können wegschwenkbar bzw. abnehmbar gestaltet sein, wenn z. B. die Wanneneinheit 6 seitlich aus der Vorrichtung herausgefahren werden soll.

Im oberen Bereich der Vorrichtung 1 bzw. des Rahmens 3 ist eine Steuer- und Versorgungseinheit 20 vorgesehen, die in erster Linie elektrische Elemente aufnimmt, die der Versorgung und Steuerung der einzelnen Elemente der Vorrichtung 1 mit elektrischer Energie dienen. Im Bereich dieser Steuer- und Versorgungseinheit ist auch ein Gebläse untergebracht, welches Luft ansaugt und auf die frisch überzogenen Artikel über eine Düse 21 ausbläst. Diese ausgeblasene Luft dient dazu, den Überzug zu vergleichmäßigen sowie die Dicke des Überzugs zu reduzieren. Überschüssige Masse wird von den Artikeln abgeblasen und gelangt auf das obere Trum 16 des Gitterbandes 15 bzw. durch dieses hindurch letztlich in die Wanne 7 der Wanneneinheit 6. Gleiches gilt für die Überschussmasse des Vorhangs, die sich außerhalb des Weges der Produktteile befindet. Der Rahmen 1 bzw. die vertikalen Säulen 4 weisen auch in diesem oberen Bereich Konsolen 22 zur Befestigung der Steuer- und Versorgungseinheit 20 auf.

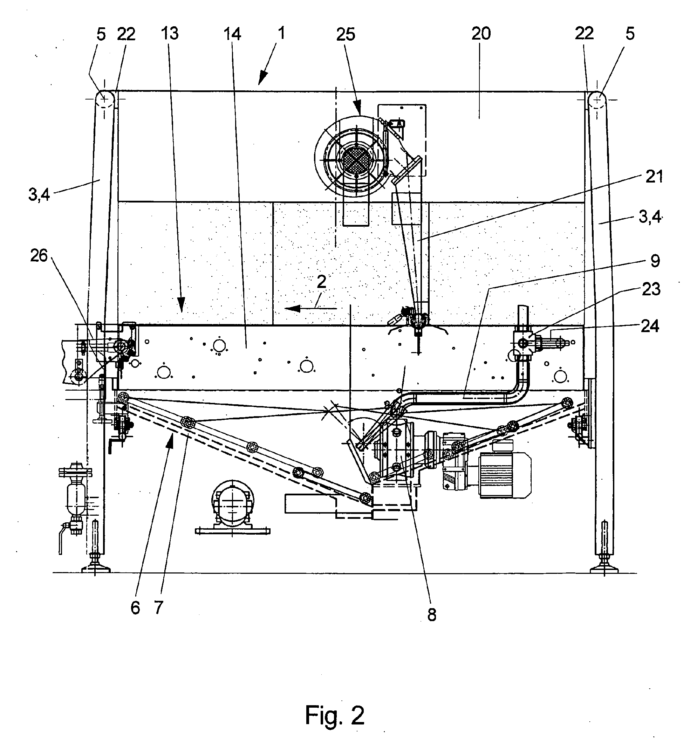

**Fig. 2** zeigt eine mehr konstruktive Darstellung der Vorrichtung 1 von der Seite. Im unteren Bereich befindet sich zwischen den Säulen 4 des Rahmens 3 die Wanneneinheit 6 mit der doppelwandig ausgebildeten Wanne 7 und der Pumpe 8. Das Steigrohr 9 kann mit einer Verzweigung 23 versehen sein, dessen Abzweigrohr 24 zu einer Bodenwallstation (nicht dargestellt) führt.

Oberhalb des Oberrandes der Wanne 7 befindet sich die Gitterbandeinheit 13 mit den Seitenwangen 14. Die Lagerung der Umlenk- und Spannwalzen ist angedeutet.

In der Steuer- und Versorgungseinheit 20 ist ein Gebläse 25 erkennbar, welches in die Düse 21 fördert, die in entsprechendem Abstand oberhalb des oberen Trums 16 des Gitterbandes 15 frei endet.

Auf der Ausgangsseite der Vorrichtung 1 ist ein Abförderband 26 schematisch angedeutet, welches die überzogenen Artikel von dem Gitterband 15 übernimmt und beispielsweise in einen bzw. durch einen Kühlkanal (nicht dargestellt) fördert.

Auch der obere Bereich zwischen der Steuer- und Versorgungseinheit 20 und dem oberen Trum 16 des Gitterbandes 15 ist abdeckbar. Hierzu dienen Klappen 27, die zweckmäßig aus durchsichtigem Kunststoff bestehen, um das ordnungsgemäße Arbeiten der Vorrichtung beobachten zu können.

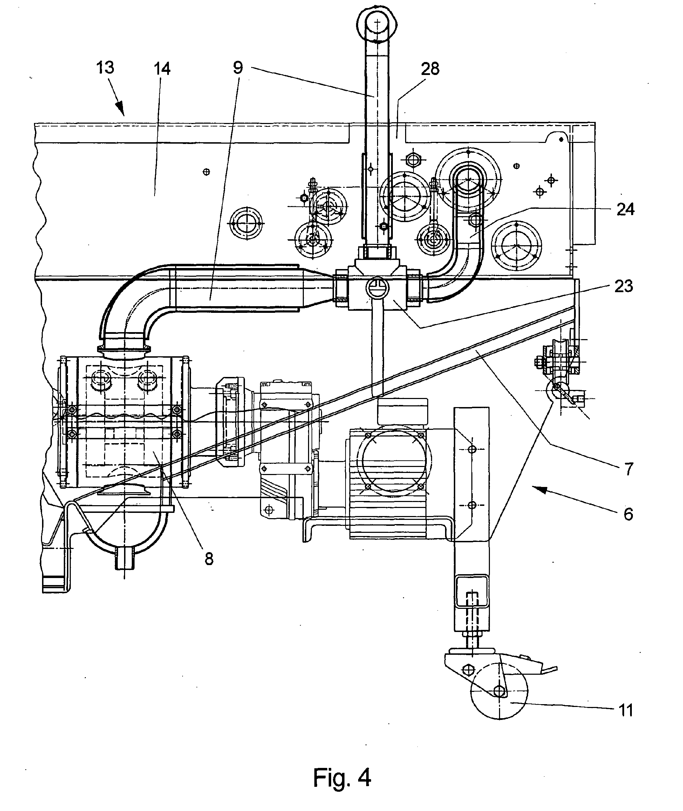

**Fig. 4** zeigt eine Detaildarstellung der Gitterbandeinheit 13 und der darunter befindlichen Wanneneinheit 6. Es ist auch erkennbar, dass in der einen Seitenwange 14 eine randoffene Ausnehmung 28 vorgesehen ist, durch die das Steigrohr 9 von unten nach oben geführt ist.

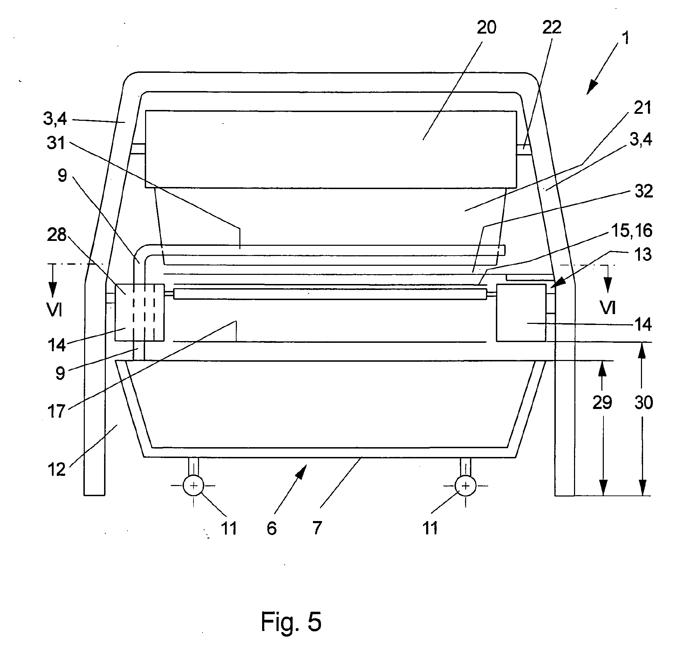

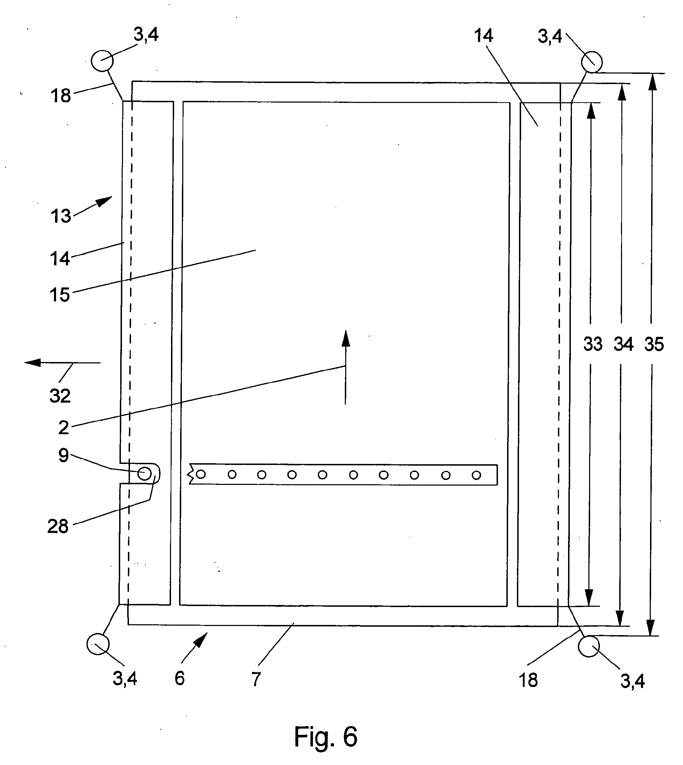

Die Fig. 5 und 6 verdeutlichen noch einmal schematisch die gegenseitige Dimensionierung der betreffenden Elemente relativ zu den vertikalen Säulen 4 des Rahmens 3. Fig. 5 zeigt den Freiraum 12 zwischen den vorderen und hinteren Säulen 4 und die dazwischen befindliche Wanne 7 der Wanneneinheit 6. Die Wanneneinheit 6 weist insgesamt eine Höhe 29 auf, die kleiner bemessen ist als der Abstand 30 der unteren Kante der Gitterbandeinheit 13. Gleichzeitig wird aus Fig. 5 erkennbar, dass die Wanne 7 auch in dieser Richtung so gestaltet ist, dass von den Bestandteilen der Gitterbandeinheit 13 abtropfende Überzugsmasse von der Wanne 7 aufgenommen wird. Es ist auch erkennbar, dass in der einen Seitenwange 14 die randoffene Ausnehmung 28 vorgesehen ist, durch die das Steigrohr 9 der Wanneneinheit 6 nach oben hindurchgeführt ist. Das Steigrohr 9 endet in einem Verteilerrohr 31, welches Bestandteil des Schleierbildners 10 ist. Zu dem Schleierbildner 10 kann auch ein Verteilerblech 32 gehören, welches ortsfest an dem Rahmen 3 gelagert ist, aber auch an dem Verteilerrohr 31 aufgehängt sein könnte, so dass es einen Bestandteil der Wanneneinheit 6 bildet.

**Fig. 6** verdeutlicht, dass in dem von den vertikalen Säulen 4 des Rahmens 3 aufgespannten Feld sämtliche Elemente untergebracht sind. An den schrägstehend angeordneten Konsolen 18 ist die Gitterbandeinheit 13 mit ihren Seitenwangen 14 befestigt. Die Gitterbandeinheit 13 weist eine Länge 33 auf. Die unterhalb der Gitterbandeinheit 13 angeordnete Wanneneinheit 6 mit ihrer Wanne 7 weist eine Länge 34 auf. Die vertikalen Säulen 4 in diesem Bereich besitzen einen Abstand 35. Es ist erkennbar, dass die Länge 34 größer als die Länge 33 und gleichzeitig kleiner als der Abstand 35 bemessen ist. Damit wird erreicht, dass sämtliche von der Gitterbandeinheit 13 abtropfende Überzugsmasse in die Wanne 7 gelangt und die Wanne 7 trotzdem seitlich aus dem Rahmen 3 herausgefahren werden kann. Dies geschieht in Richtung des Pfeils 36, also senkrecht zur Arbeitsrichtung 2.

Durch die Schräganordnung der Konsolen 18 und das Freistellen der vertikalen Säulen 4 außen an der Vorrichtung 1 wird gleichzeitig die Möglichkeit geschaffen, dass An- und Abförderbänder eingangsseitig und ausgangsseitig der Vorrichtung dicht an die Umlenkstellen des Gitterbandes 15 anschließend herangestellt werden können.

### BEZUGSZEICHENLISTE

- 1: Vorrichtung
- 2: Arbeitsrichtung
- 3: Rahmen
- 4: Säule
- 5: Querträger
- 6: Wanneneinheit
- 7: Wanne
- 8: Pumpe
- 9: Steigrohr
- 10: Schleierbildner

- 11: Rad
- 12: Freiraum
- 13: Gitterbandeinheit
- 14: Seitenwange
- 15: Gitterband
- 16: oberes Trum
- 17: unteres Trum
- 18: Konsole
- 19: Verkleidungselement
- 20: Steuer- und Versorgungseinheit

- 21: Düse
- 22: Konsole
- 23: Verzweigung
- 24: Abzweigrohr
- 25: Gebläse
- 26: Abförderband
- 27: Klappe
- 28: Ausnehmung
- 29: Höhe
- 30: Abstand

- 31: Verteilerrohr
- 32: Verteilerblech
- 33: Länge
- 34: Länge
- 35: Abstand
- 36: Pfeil

## Patentansprüche

1. Vorrichtung (1) zum Überziehen von essbaren Produktstücken mit einer Kakaobutter oder ein sonstiges Fett enthaltenden Masse, mit einem zumindest etwa vertikale Säulen (4) aufweisenden Rahmen (3), einem im Rahmen (3) ortsfest angeordneten angetriebenen Gitterband (15) zur Aufnahme der Produktstücke, einem Schleierbildner (10), einem Kreislauf für die Masse mit Pumpe (8) und Steigrohr (9) sowie einer Wanne (7) zum Auffangen der Überschussmasse, die in Arbeitsrichtung (2) eine solche Länge (34) aufweist, dass sämtliche Überschussmasse, die von dem Gitterband (15) und von dem Gitterband zugeordneten Teilen der Vorrichtung (1) abtropft, von der Wanne (7) aufgefangen wird, **dadurch gekennzeichnet, dass** der Rahmen (3) mit seinen Säulen (4) die Vorrichtung außen mit Abstand umhüllend angeordnet ist und so zwischen seinen Säulen (4) in Arbeitsrichtung (2) einen größeren Abstand (35) und Freiraum (12) aufweist, als es der Länge (34) und Höhe (29) der Wanne (7) entspricht, und dass die Wanne (7) als unter dem Gitterband (15) zwischen den Säulen (4) seitlich herausfahrbare und freikommende Wanneneinheit (6) ausgebildet ist.

2. Vorrichtung (1), insbesondere nach Anspruch 1, **dadurch gekennzeichnet, dass** die herausfahrbare und freikommende Wanneneinheit (6) zumindest die Pumpe (8), das Steigrohr (9) und den Schleierbildner (10) umfasst.

3. Vorrichtung (1) nach Anspruch 1 oder 2, **dadurch gekennzeichnet, dass** die Wanneneinheit (6), das Gitterband (15) mit seiner Lagerung und seinem Antrieb und elektrische Versorgungs- und Steuerelemente als je eine separat montierbare Einheit (13, 20) ausgebildet sind, die einzeln in den Rahmen (3) einfügbar sind.

4. Vorrichtung (1) nach mindestens einem der Ansprüche 1 bis 3, **dadurch gekennzeichnet, dass** der Rahmen (3) vier zumindest etwa vertikal angeordnete Säulen (4) aufweist, die außen an der Vorrichtung (1) so angeordnet sind, dass die Säulen (4) in und quer zur Arbeitsrichtung (2) größere Abstände (35) voneinander aufweisen, als es der Länge (33, 34) und der Breite der Gitterbandeinheit (13) und der Wanneneinheit (6) entspricht.

5. Vorrichtung (1) nach einem der Ansprüche 1 bis 4, **dadurch gekennzeichnet, dass** die Gitterbandeinheit (13) das Gitterband (15), Umlenkwellen, der Lagerung dienende Seitenwangen (14) und Antriebselemente umfasst.

6. Vorrichtung (1) nach Anspruch 5, **dadurch gekennzeichnet, dass** in einer der Seitenwangen (14) der Gitterbandeinheit (13) eine nach außen randoffene Ausnehmung (28) für den Durchtritt des Steigrohres (9) vorgesehen ist.

7. Vorrichtung (1) nach einem der Ansprüche 1 bis 6, **dadurch gekennzeichnet, dass** die Wanneneinheit (6) eine doppelwandig ausgebildete Wanne (7), die Pumpe (8) für den Umlauf der Masse, eine Rückförderpumpe für Überschussmasse, eine Heizeinrichtung für die Wanne (7) einschließlich schräger Ablaufflächen, das Steigrohr (9) und den Schleierbildner (10) einschließlich Verteilerblech (32) aufweist.

8. Vorrichtung (1) nach einem der Ansprüche 1 bis 7, **dadurch gekennzeichnet, dass** die Wanneneinheit (6) auf Rädern (11) frei verfahrbar ist.

9. Vorrichtung (1) nach einem der Ansprüche 1 bis 8, **dadurch gekennzeichnet, dass** je zwei Säulen (4) des Rahmens (3) im oberen Bereich durch einen sich quer zur Arbeitsrichtung (2) erstreckenden Querträger (5) miteinander verbunden sind.

10. Vorrichtung (1) nach einem der Ansprüche 1 bis 9, **dadurch gekennzeichnet, dass** die Gitterbandeinheit (13) und die Versorgungs- und Steuerungseinheit (20) innen an Konsolen (18, 22) an den Säulen (4) gelagert sind.
